# EUROPEAN PATENT APPLICATION

(11) **EP 1 321 744 A1**
(43) Date of publication of application: **25.06.2003**
(21) Application number: 01965614.9
(22) Date of filing: 13.09.2001
(51) Int. Cl.: G01D 5/245, G01B 7/30, H02K 29/06

(54) **ROTATIONAL POSITION DETECTOR AND MOTOR EQUIPPED WITH ROTATIONAL POSITION DETECTOR**

(30) Priority: 19.09.2000 JP 2000324704; 19.09.2000 JP 2000324705
(71) Applicant: Honda Giken Kogyo Kabushiki Kaisha, Minato-ku, Tokyo 107-8556 (JP)
(72) Inventor: TSUKADA, Yoshinari, Sayama-shi, Saitama 350-1381 (JP)
(74) Representative: Herzog, Markus, Dipl.-Phys. Dr.
(86) International application number: JP0107948
(87) International publication number: WO02025216

(57) **Abstract**

Is disclosed a rotary position detector comprising a rotor rotatable in synchronism with a motor and a rotary position detecting portion for generating a voltage signal corresponding to an angular position detectable as a magnetic flux change with rotation of the rotor, wherein the detecting portion is disposed with respect to the rotor within a range of an angle of 2 π /n, where n is the number of pairs of poles of the motor, and a motor provided with the same rotary position detector, wherein a motor drive control circuit assembled together with the detecting portion at the same place on the motor. The rotary position detector is easy to manufacture, small and light, easy to mount on a motor and easy to connect with a motor drive control printed circuit. The motor provided with the same rotary position detector is also described.

## Description

### BACKGROUND OF THE INVENTION

The present invention relates to a rotary position detector for detecting a rotation angle of a motor and a motor provided with the same rotary position detector, which operation is controlled based on its current rotational position sensed by the detector.

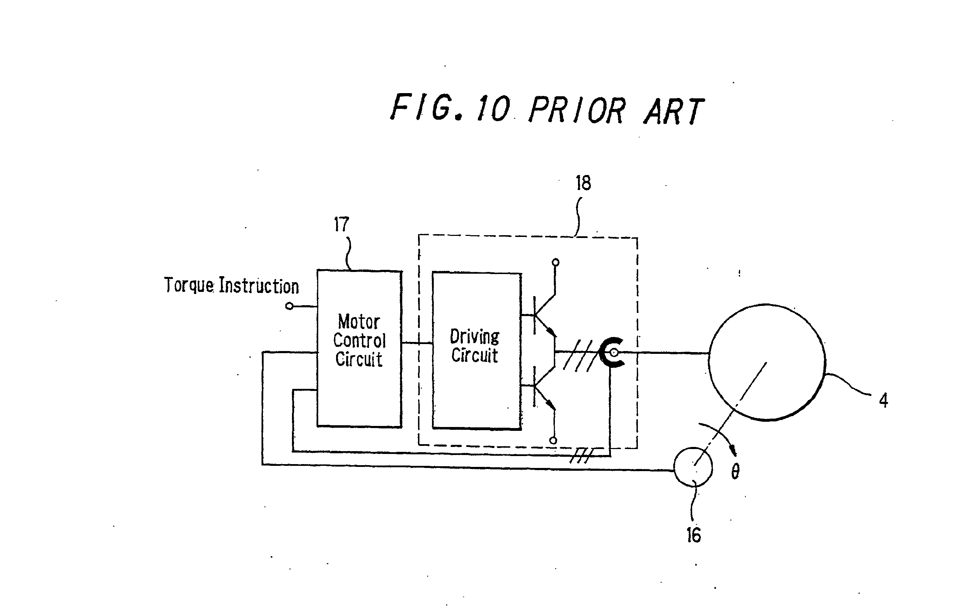

Generally, the operation of a brushless synchronous motor 4 is controlled in such a manner that, as shown in Fig. 10, a current rotational position of the motor 4 is detected by a rotary position detector 16 and transferred to a motor control circuit 17 that in turn performs the calculations based on the rotational position detection signal and an externally given torque instruction and controls the electric current supply to the motor through an inverter circuit 18 to obtain a specified output torque of the motor. In Fig. 10, there is shown only a configuration for one phase for clearness.

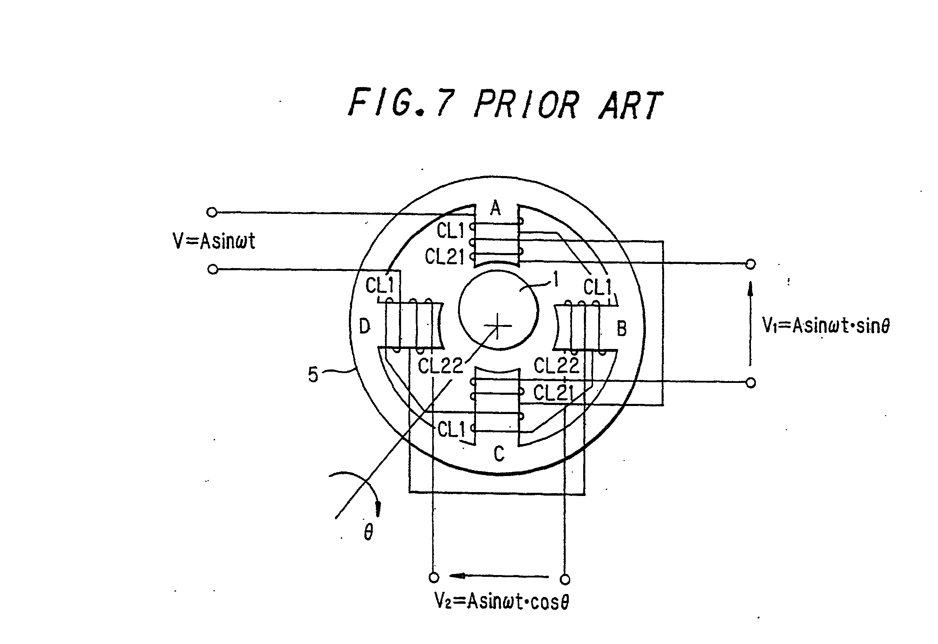

Fig. 7 shows a basic construction (for one pair of poles) of the rotary position detector 16, which comprises a rotor 1 composed of a disk type magnetic material attached eccentrically to a rotation axis (this corresponds to a rotor having a protrusion formed on a periphery of the rotation shaft and mounted coaxially on the rotation shaft of the motor) for converting a rotation of the motor into mechanically absolute position data, a stator 5 having 4 magnetic poles A∼D formed at an equidistance at its periphery and opposed with a specified gap to the circumference of the rotor 1, a primary side exciting coil CL1 wound for connection in series of the pole pieces A to D, a first detection coil CL21 wound around pole pieces A,C disposed on the opposite sides and a second detection coil CL22 wound around pole pieces B,D disposed on the opposite sides to produce differential outputs at pole pieces A, B, C and D respectively.

Once an exciting voltage V=A sinωt of ac current was applied to the exciting coil CL1, a voltage signal V1=A sinωt · sinθ is produced in the first detection coil CL21 and a voltage signal V2= A sinωt · cosθ is produced in the second detection coil CL22. as a magnetic flux in a gap changes with rotation of the rotor 1. Based on each of the voltage signals V1 and V2, a rotation angle θ of the motor can be determined from a phase difference between the exciting voltage signal and the induced voltage signal.

In a conventional rotary position detector, a rotor is mounted on a rotation shaft of a motor and a stator is disposed with a plurality of magnetic pole pieces surrounding the entire circumference of the rotor. An exciting coil and a detecting coil are wound around an entire circumference of the stator.

The conventional rotary position detector is mounted on an entire circumference of an end of a motor. A thin, flat motor has a large-diameter rotation shaft and requires the use of a large rotary position detector to mount thereon.

Japanese Laid-open Patent Publication No. 5-252711 discloses a rotary position detector in which two yoke portions made each in the form of an arc opposite to the circumference of a rotor are disposed parallel to each other and coupled at the center by a coupler to form a H-shape yoke portion provided at each end with a magnetic pole piece projecting to form two magnetic circuits between each magnetic pole piece and the rotor at a permeance change phase difference of 90°, eliminating the need of surrounding the circumference of the rotor by the pole pieces.

Problems that are involved in the convetional rotary position detectors are as follows:

For a rotary position detector having a stator disposed with a plurality of magnetic pole pieces surrounding the circumference of a rotor body, it must have a large diameter sufficient to surround the circumference of an end of a motor.

For a rotary position detector having a stator disposed with a plurality of magnetic pole pieces surrounding the circumference of a rotor body, it must be mounted on the circumference at an end of the motor, decreasing the space factor and requiring the separate mounting of an ECU substrate for control of the motor drive. Particularly, a thin, flat motor having a large diameter shaft requires a large-size rotary position detector having an enlarged mounting hole.

For a rotary position detector in which two yoke portions are formed in that an arc opposite to the circumference of a rotor are disposed parallel to each other and coupled at the center by a coupler to form an H-shape yoke portion provided at each end with a magnetic pole projecting to form two magnetic circuits between each magnetic pole piece and partially surrounding the rotor body, the H-shaped detecting portion is elongated in the axial direction. The one-piece type H-shaped yoke portion may be achieved by a sintering or wire-cutting method, but it is not easy and rather difficult to manufacture. Two separate components of the yoke portion may be easily formed and connected with each other with screws or by welding. However, the screw or weld joint of the yoke portion may affect the magnetic path, thereby decreasing the detection accuracy of the device.

### SUMMARY OF THE INVENTION

Accordingly, an object of the present invention is to provide a compact and easy-to-manufacture rotary position detector which comprises a rotor having a plurality of protrusions formed at equidistances on the circumference of its body (the number of protrusions corresponds to the number of pairs of poles of the motor) and being rotatable in synchronism with the motor, and a detecting portion opposed to the rotor with a specified gap to the circumference of the rotor to detect a change of a magnetic flux in the gap while the rotor is rotating synchronously with the motor and generate a voltage signal representing a change in rotation angle of the motor, wherein the detecting portion is arranged within a range of angle of 2 π /n (where n is the number of pairs of poles of the motor).

Another object of the present invention is to provide a compact and easy-to-mount rotary position detector which comprises a rotor having a plurality of protrusions formed at equidistances on the circumference of its body (the number of protrusions corresponds to the number of pairs of poles of the motor) and being rotatable in synchronism with the motor, and a detecting portion opposed to the rotor with a specified gap to the circumference of the rotor body to detect a change of a magnetic flux in the gap while the rotor is rotating synchronously with the motor and generate a voltage signal representing a change of a rotation angle of the motor, wherein the detecting portion is disposed within a range of angle of 2 π /n to the circumference of the rotor (where n is the number of pairs of poles of the motor) and mounted together with a motor drive control circuit at the same place of the motor to increase the space factor on the motor.

### BRIEF DESCRIPTION OF THE DRAWINGS

Figure 1 is a perspective view of a thin, flat type motor provided with a rotary position detector embodying the present invention.
Figure 2 is a front view of a detection head of the detector shown in Fig. 1.
Figure 3 is a schematic construction view of a rotary position detector of the present invention for a motor having two pairs of poles.
Figure 4 is a schematic construction view of a rotary position detector of the present invention for a motor having three pairs of poles.
Figure 5 is a schematic construction view of a rotary position detector of the present invention for a motor having four pairs of poles.
Figure 6 is a schematic construction view of a rotary position detector according to another embodiment of the present invention.
Figure 7 is a schematic view showing a basic construction of a conventional rotary position detector.
Figure 8 is a schematic sectional elevation of a motor with a rotary position detector according to an embodiment of the present invention.
Figure 9 is a side view of the same motor with the same rotary position detector of Fig. 8.
Figure 10 is a block diagram of a conventional motor drive control system.

### PREFERRED EMBODIMENT OF THE INVENTION

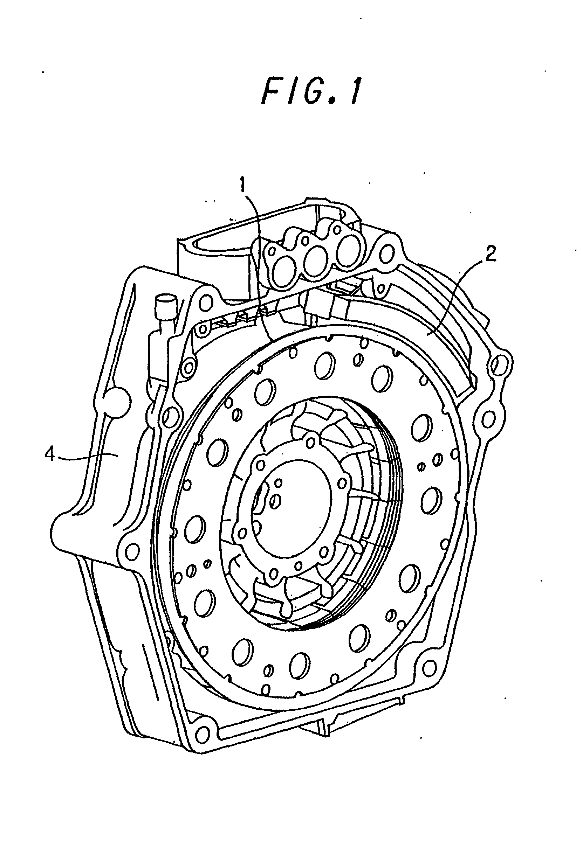

As shown in Fig. 1, a rotary position detector according to the present invention is mounted for example to a thin, flat motor 4 having a rotation shaft of a large diameter in such a manner that a rotor 1 having a plurality of protrusions formed at equidistances on its Circumference is concentrically mounted on the rotatable armature of the motor. As discussed below of protrusions on rotor 1 corresponds to the number of pairs of poles of the motor. A detection head 2 is secured to the stator of the motor 4 and opposed to rotor 1 with s specified gap to a protion of the circumference of the rotor 1 to generate a voltage signal corresponding to a change in the rotational angle of the motor by detecting a change in the magnetic flux in the gap as the rotor 1 rotates.

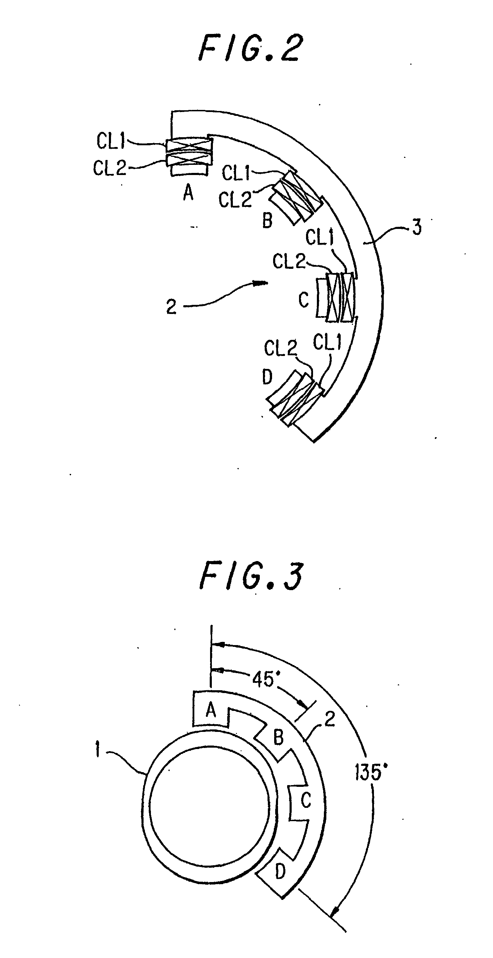

As shown in Fig.2, the detecting head 2 comprises a yoke member 3 having four (4) magnetic pole pieces A to D formed at equidistances on its circumstance and opposed with a specified gap to the rotor body 1. Exciting coils CL1 and detecting coils CL2 are wound around each of the magnetic pole pieces. The exciting coils CL1 and the detecting coils CL2 wound on the respective pole-pieces are electrically connected to each other respectively in a similar way as shown in Fig. 7.

Namely, the exciting coils CL1 wound around the pole pieces A to D are connected in series. The detection coils CL2 wound around the pole pieces A, C and B, D are connected in series to give differential outputs in turn respectively. When an alternating waveform exciting voltage V=Asinωt is applied to the exciting coils CL1, the detection coils CL2 between the pole pieces A,C generate a voltage V1=Asinωt · sinθ and the detection coils between the pole pieces B,D generate a voltage V2=Asinωt · cosθ, which corresponds, respectively, to changes of the magnetic flux formed in a gap as the rotor 1 rotates.

It is noted that a multipolar motor does not always requires the provision of a detecting portion having pole pieces surrounding the circumference of the rotor 1 but require the provision of a detecting portion for each pair of poles. Based on the above, the detection head 2 of the rotary position detector is disposed within a range of an angle of 2 π /n to the rotor 1 where n is the number of poles of the motor. Practically, for the motor having 2 pairs of poles as shown in Fig. 3, a substantially oval rotor 1 having two protrusions formed at equidistances on its circumference is used and the detection head 2 having magnetic pole pieces A-D formed at an interval of circumferential angle of 45° to the rotor 1 is disposed. In this instance, as shown in Fig.3, the detection head 2 is disposed within a range of an angle of 135° with respect to the rotor 1.

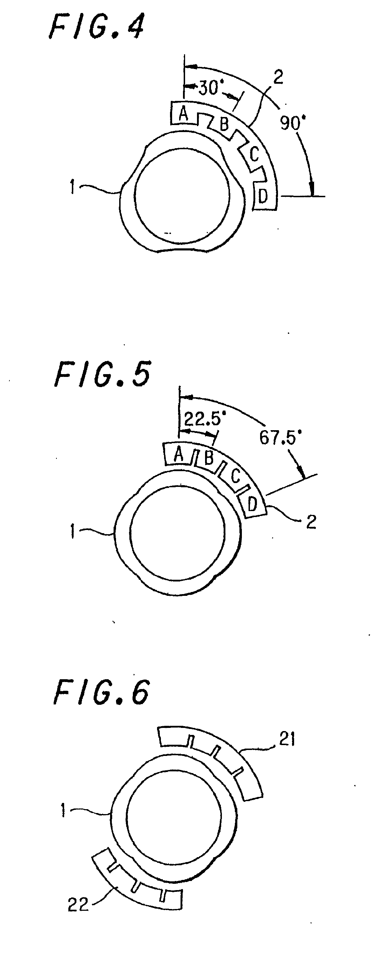

For a motor 4 having 3 pairs of poles, as shown in Fig. 4, a substantially triangular rotor 1 having three (3) protrusions formed at equidistances on its circumference is used and the detection head 2 having magnetic pole-pieces A-D formed thereon at an interval of circumferential angle of 30° is disposed. In this instance, the detection head 2 is disposed within a range of an angle of 90° with respect to the circumference of the rotor 1.

For a motor 4 having 4 pairs of poles, as shown in Fig. 5, a substantially square rotor 1 having four (4) protrusions formed at equidistances on its circumference is used and the detection head 2 having magnetic pole pieces A-D formed thereon at an interval of circumferential angle of 22.5° is disposed. In this instance, the detection head 2 is disposed within a range of an angle of 67.5° with respect to the circumference of the rotor 1.

For a motor 4 having 5 pairs of poles, a substantially pentagonal rotor 1 having five (5) protrusions formed at equidistances on its circumference is used and the detection head 2 having magnetic pole pieces A-D formed thereon at an interval of circumferential angle of 18° to the rotor 1 is disposed. In this instance, the detection head 2 is disposed within a range of an angle of 54° with respect to the circumference of the rotor 1.

For a motor 4 having 6 pairs of poles, a substantially hexagonal rotor 1 having six (6) protrusions formed at equidistances on its circumference is used and the detection head 2 having magnetic pole-pieces A-D formed thereon at an interval of circumferential angle of 15° is disposed. In this instance, the detection head 2 is disposed within a range of an angle of 45° with respect to the circumference of the motor 4. The same rule is applied correspondingly to further embodiments.

In the rotary position detector according to the present invention, paired detection heads 21 and 22 are disposed at positions symmetric with respect to the axis of the rotor 1 as shown in Fig. 6 and detection signals from the detection heads 21 and 22 are averaged by a separately provided processing portion (not shown). This can maintain the detection accuracy of the device since the effect of an error in a mechanically secured position of the rotor 1 is compensated by averaging of the detection signals. This is especially useful for motors having not less than 4 pairs of poles.

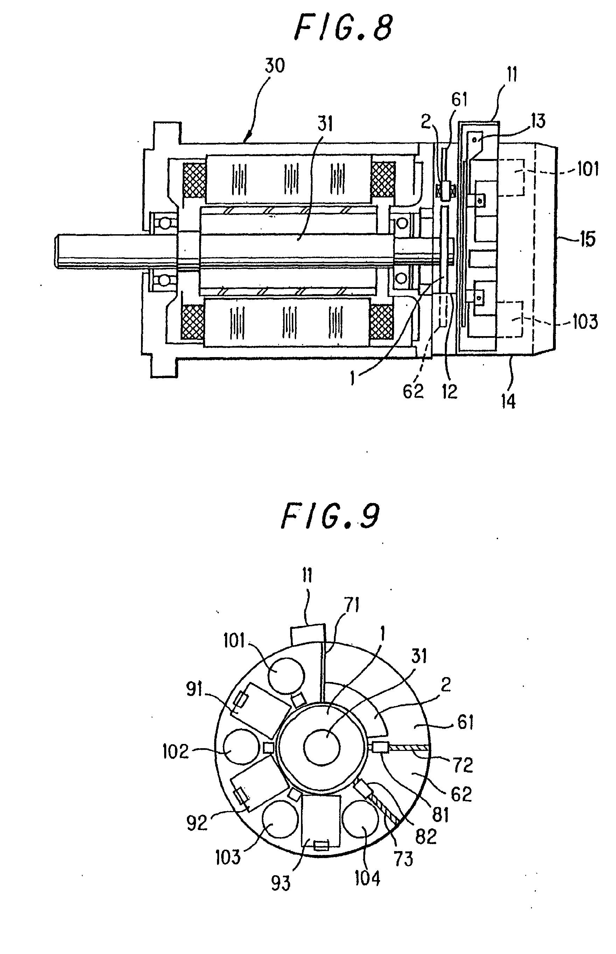

As shown in Figs. 8 and 9, a motor 30 is provided at a rotation shaft 31 with a rotary position detector in such a way that a rotor 1 having the same number of equally spaced circumferential protrusions as the number of pairs of poles of the motor 30 is secured coaxially onto the rotation shaft 31 of the motor 30. A detection head 2 is secured to a stator of the motor with a specified gap from the rotor 1 to detect a change in the magnetic flux with rotation of the rotor 1 and generate a detection voltage signal corresponding to a change in the rotation angle of the motor 30. Motor drive control circuit boards 61 and 62 are mounted together with the detection head 2. at the same position on the stator of the motor 30. Figs. 8 and 9 illustrate a motor having 4 pairs of poles, which motor is provided with a rotary position detector according to the present invention. In Figs. 8 and 9, there are shown power transistors of phases G, V and W respectively at 91, 92 and 93, electrolytic condensers 101-104, a power source connection terminal 11, a shield cover 12, a terminal/bus plate 13, a heat sink/case 14 and a cooling fins 15.

The drive control circuit boards 61, 62 are mounted together with the detection head 2 at the same place on the stator of the motor 30.

The circuit board 61 contains thereon a motor control circuit 17 of the type shown in Fig. 10. The circuit board 62 contains thereon an inverter circuit 18 shown of the type in Fig. 10. Each of the circuit boards 61, 62 are shielded by the shield covers 71-73 respectively. The shield covers 72 and 73 are provided with interboard connectors 81 and 82 respectively.

The motor control circuit 17 includes a converter for converting a rotary position detection signal from the detection head 2 into a digital data to be used for control of the drive of the motor 30.

The rotary position detector according to the present invention can be mounted effectively (with a high space factor) on a motor 30 in such a manner that a rotor 1 is secured onto a rotation shaft 31 (or an armature of a thin flat motor having no rotation shaft and a detection head 2, which is a simple and small yoke member 3 having pole pieces A to D formed thereon and having an exciting coil CL1 and' detection coils CL2 wound around the pole pieces, is secured on a stator of the motor 30 opposite a portion of the circumference of the rotor 1. The detection head 2 can be mounted at any place on a supporting member around the rotor 1. This facilitates mounting of detector on the motor.

Furthermore, since the motor drive control circuit boards 61 and 62 can be mounted together with the detection head 2 of the rotary position detector on the same end portion of the motor 30, the detection head can be easily connected with the shortest wiring to the circuit boards 61 and 62 of the motor. This can improve the noise immunity of the detection system.

For a motor 30 having an increased number of pairs of poles, circuit boards 61 and 62 to be mounted together with the detection head 2 can be prepared of a square form with an increased yield of a substrate material.

As is apparent from the foregoing, the rotary position detector according to an embodiment of the present invention comprises a rotor having the same number of equally spaced circumferential protrusions as the number of pairs of poles of the motor 30 and a detection head portion disposed opposite to the circumference of the rotor with a specified gap between them to detect a change in magnetic flux in the gap with the rotation of the rotor and thereby generate a voltage signal corresponding to a change of rotation angle of the motor. The detection head portion is disposed opposite to the circumference of the rotor within a range of an angle of 2 π /n (where n is the number of pairs of poles of the motor). This allows the detection head portion to be opposed to only a protion of the circumference of the rotor. The rotary position detector offers several outstanding advantages: small and light; easy to manufacture with an increased yield of material; and easy to assemble on a motor with a high space factor and a wide selection of mounting positions.

According to the present invention, it is possible to provide a motor provided with a rotary position detector comprising the rotor having the same number of equally spaced circumferential protrusions as the number of pairs of poles of the motor 30 and a detection head portion opposed with a specified gap to the rotor to detect a change in magnetic flux in the gap with the rotation of the rotor and generate a voltage signal corresponding to a change of a rotation angle of the motor can be mounted on the motor, wherein the detection portion can be disposed within a range of an angle of 2 π /n with respect to the circumference of the rotor (n is the number of pairs of poles of the motor) and the motor drive control circuit boards can be mounted together with the detection head portion at the same end in the motor body. This enables the motor with the rotary position detector to offer the additional outstanding advantages that the detector is small and light, easy to manufacture with an increased yield of material and easy to mount on a motor with a high space factor and a wide selection of mounting thereon, and the circuit boards of the motor can be easily connected to the detection head portion with the shortest wiring.

## Claims

1. A rotary position detector comprising a rotor rotatable in synchronism with a motor, said rotor having a plurality of protrusions formed at equidistances on its circumference and the number of said protrusions corresponding to the number of pairs of poles of the motor, and a rotary position detecting portion disposed opposite the circumference of the rotor with a specified gap between them to generate a voltage signal corresponding to a rotational position detectable as a change of a magnetic flux in the gap with rotation of the rotor, wherein the detecting portion is disposed in respect to the rotor within a range of an angle of 2 π /n where n is the number of pairs of poles.

2. A rotary position detector as defined in claim 1, wherein two detecting portions are disposed respectively at positions symmetric in respect to a rotational axis of the rotor and signals from the respective detecting portions are averaged.

3. A motor with a rotary position detector, said detector comprising a rotor rotatable in synchronism with the motor, said rotor having a plurality of protrusions formed at equidistances on its circumference and the number of said protrusions corresponding to the number of pairs of poles of the motor, and a rotary position detecting portion disposed opposite the circumference of the rotor with a specified gap between them to generate a voltage signal corresponding to a rotational position detectable as a change of a magnetic flux in the gap with rotation of the rotor, wherein the detecting portion is disposed in respect to the rotor within a range of an angle of 2 π /n where n is the number of pairs of poles of the motor and a motor drive control circuit is assembled together with the detecting portion at the same place on the motor.
